# EUROPEAN PATENT APPLICATION

(11) **EP 3 343 494 A1**
(43) Date of publication of application: **04.07.2018**
(21) Application number: 17207838.8
(22) Date of filing: 15.12.2017
(51) Int. Cl.: G06Q 30/06

(54) **ELECTRONIC SIGNATURE OF TRANSACTIONS BETWEEN USERS AND REMOTE PROVIDERS BY USE OF TWO-DIMENSIONAL CODES**

(30) Priority: 29.12.2016 IT 201600132156
(71) Applicant: INFOCERT S.p.A., 00187 Roma (IT)
(72) Inventor: ODDI, Luca, 00187 Roma (IT)
(74) Representative: Maccagnan, Matteo

(57) **Abstract**

The invention concerns a certification method for certifying transactions between a user (2) and a remote provider (3) by means of an electronic signature system (10), wherein the user (2) uses a browser (221) installed on a first electronic communications device (22) to start a given transaction with a management server (31) of the remote provider (3), and wherein the electronic signature system (10) includes a certification server (11) connected to a database (12) on which first data related to the given transaction are stored, including: a user code (UT_UID) that univocally identifies the user (2), a provider code (SP UID) that univocally identifies the remote provider (3) and a transaction code (TX_UID2; TX_UID3) that univocally identifies the given transaction. Said electronic signature system (10) also includes a software application (13) on which the user code (UT_UID) is stored and which is installed on a second electronic communications device (21) used by the user (2), said second electronic communications device (21) being equipped with a digital camera. The certification method comprises a certification step that includes: requesting, by the management server (31), certification of the given transaction from the certification server (11), and sending the provider code (SP_UID) and at least one document related to the given transaction from said management server (31) to said certification server (11); generating, by the certification server (11), a first two-dimensional code (QR2; QR4) in which the transaction code (TX_UID2; TX_UID3) is encoded; sending the first two-dimensional code (QR2; QR4) from the certification server (11) to the management server (31); sending the first two-dimensional code (QR2; QR4) from the management server (31) to the browser (221); displaying, by the browser (221), the first two-dimensional code (QR2; QR4) on a screen of the first electronic communications device (22); capturing, by the digital camera of the second electronic communications device (21), the first two-dimensional code (QR2; QR4) displayed on the screen of the first electronic communications device (22); extracting, by the software application (13), the transaction code (TX_UID2; TX_UID3) encoded in the captured first two-dimensional code (QR2; QR4); sending, from the software application (13) to the certification server (11), second data related to the given transaction that include the user code (UT_UID) stored on the software application (13) and the extracted transaction code (TX_UID2; TX_UID3); checking, by the certification server (11), whether the second data related to the given transaction received from the software application (13) are consistent with the first data related to the given transaction stored on the database (12); and, if the first and the second data related to the given transaction are consistent with each other, electronically signing, by the certification server (11), the document related to the given transaction received from the management server (31), and storing, on the database (12), the electronically signed document related to the given transaction.

## Description

### TECHNICAL FIELD OF INVENTION

The present invention relates to an electronic signature method, system and service for certifying transactions between users and remote providers of tangible and/or intangible products and/or services, by means of the use of two-dimensional codes.

### STATE OF THE ART

As is known, nowadays electronic communications devices (such as smartphones, mobile phones, tablets, laptops, desktop computers, smart TVs, smartwatches, etc.) are increasingly used to carry out transactions with remote providers of tangible and/or intangible products and/or services. For example, an electronic communications device can be used by a respective user to make a request to a remote provider to supply a tangible or intangible product or service, where this request normally implicates a corresponding payment by the user. Typically, the request is forwarded to a management server of the remote provider via the Internet, in such a way that the remote provider, after making the necessary checks, can proceed with supplying the requested product/service.

As a payment is involved (directly or indirectly), it is necessary that the request originating from the electronic communications device of the user be authenticated in a secure manner to avoid fraud by third parties fraudulently pretending to be the user.

Currently, many authentication methods are based on the use of access/authentication credentials that typically include a username and a static password (and, if necessary, also a Personal Identification Number (PIN)).

Some authentication methods instead provide for the use of a One Time Password (OTP) that can be sent to users via SMS (acronym for "Short Message Service") when necessary, or can be generated by so-called security tokens (also called hardware tokens, authentication tokens, cryptographic tokens, or simply tokens), which are generally provided as special physical devices, or implemented via software. In general, a token generates random/pseudorandom numerical codes to use in combination with other access/authentication credentials (e.g. username, static passwords, PIN, etc.), so as to implement a so-called two-factor authentication.

Unfortunately, the aforementioned methods have evident security limits (consider, for example, the possible interception/theft of access/authentication credentials and the theft/loss of tokens) and can therefore expose both users and the remote providers of products and/or services to risks of fraud.

Thus, various systems have been developed and proposed in recent years for the purpose of making transactions between users and remote providers of products and/or services more secure.

For example, US 7,021,534 B1 describes a secure device equipped with a processor, an image capture device (for example, a digital camera), memory, an input unit (for example, a keypad, touch screen, module for fingerprint recognition and/or for facial recognition, etc.) and an output unit (for example, a liquid crystal display).

In particular, the secure device according to US 7,021,534 B1 can be integrated in a token, a key ring, a mobile phone, etc., and is configured to capture, by means of the image capture device, one or more images or one or more videos in which one or more linear (i.e. one-dimensional) or multidimensional (for example, two-dimensional) bar codes are included. Information relating to a transaction between a user of the secure device and a remote provider of products and/or services is encoded in this/these bar code(s) (for example, by means of symmetric or asymmetric cryptographic algorithms).

Furthermore, the secure device according to US 7,021,534 B1 is also configured to ask the user, via the output unit, for identification information (for example, a PIN, password and/or biometric parameters) in order to identify the user, to ensure that the latter is authorized to use the secure device.

Once the user has provided the identification information via the input unit, the secure device extracts, via the processor, the information relating to the transaction from the captured images(s) or captured video(s). After which, said secure device controls the identification information provided by the user and, if identification of the user is successfully verified, generates instructions/information that it transmits (for example, via radio signals) to the remote provider of products and/or services.

The secure device according to US 7,021,534 B1 can be conveniently used in various applications, for example, for authentication, authorization and secure document distribution purposes.

US 7,021,534 B1 also describes the possibility of handling a transaction between a user and a remote provider of products and/or services through a third party. In particular, in this case, the images or videos can be generated by the third party and a public key and an address of a server of said third party can be stored in the secure device. The aforementioned server can conduct the transaction on behalf of the user of the secure device. In detail, once the image (or video) is deciphered, the secure device can send a confirmation to the third party over a wide area network (for example, a mobile phone or wireless network). The third party can then cooperate with a server of the remote provider of products and/or services in order to complete the transaction, for example, by sending the information necessary for completing the transaction (e.g. payment and shipping information) to the remote provider's server.

### OBJECT AND SUMMARY OF THE INVENTION

A general object of the present invention is to provide a method, system and service for certifying transactions between users and remote providers of products and/or services more securely and in an alternative manner with respect to currently existing solutions, such as those based on the use of access/authentication credentials and OTPs.

In particular, a specific object of the present invention is to provide a method, system and service for certifying transactions between users and remote providers of products and/or services, this certification method, system and service being based on the use of two-dimensional codes and being more secure, or in any case alternative, with respect to the solution disclosed in US 7,021,534 B1.

These and other objects are achieved by the present invention in so far as it relates to certification method for transactions between a user and a remote provider, as defined in the appended claims.

In particular, the present invention concerns a certification method for transactions between a user and a remote provider by means of an electronic signature system, wherein the user uses a browser installed on a first electronic communications device to start a given transaction with a management server of the remote provider, and wherein the electronic signature system includes:
- a certification server connected to a database on which first data related to the given transaction are stored including
   - a user code that univocally identifies the user,
   - a provider code that univocally identifies the remote provider and
   - a transaction code that univocally identifies the given transaction; and
- a software application on which the user code is stored and which is installed on a second electronic communications device used by the user, said second electronic communications device being equipped with a digital camera.

The certification method comprises a certification step that includes:
- requesting, by the management server, certification of the given transaction by the certification server, and sending the provider code and at least one document related to the given transaction from said management server to said certification server;
- generating, by the certification server, a first two-dimensional code in which the transaction code is encoded;
- sending the first two-dimensional code from the certification server to the management server;
- sending the first two-dimensional code from the management server to the browser;
- displaying, by the browser, the first two-dimensional code on a screen of the first electronic communications device;
- capturing, by the digital camera of the second electronic communications device, the first two-dimensional code displayed on the screen of the first electronic communications device;
- extracting, by the software application, the transaction code encoded in the first two-dimensional code captured;
- sending, from the software application to the certification server, second data related to the given transaction that include the user code stored on the software application and the extracted transaction code;
- checking, by the certification server, whether the second data related to the given transaction received from the software application are consistent with the first data related to the given transaction stored on the database; and,
- if the first and the second data related to the given transaction are consistent with each other,
   - electronically signing, by the certification server, the document related to the given transaction received from the management server and
   - storing, on the database, the electronically signed document related to the given transaction.

### BRIEF DESCRIPTION OF DRAWINGS

For a better understanding of the present invention, some preferred embodiments, provided by way of non-limitative example, will now be illustrated with reference to the accompanying drawings (not to scale), in which:

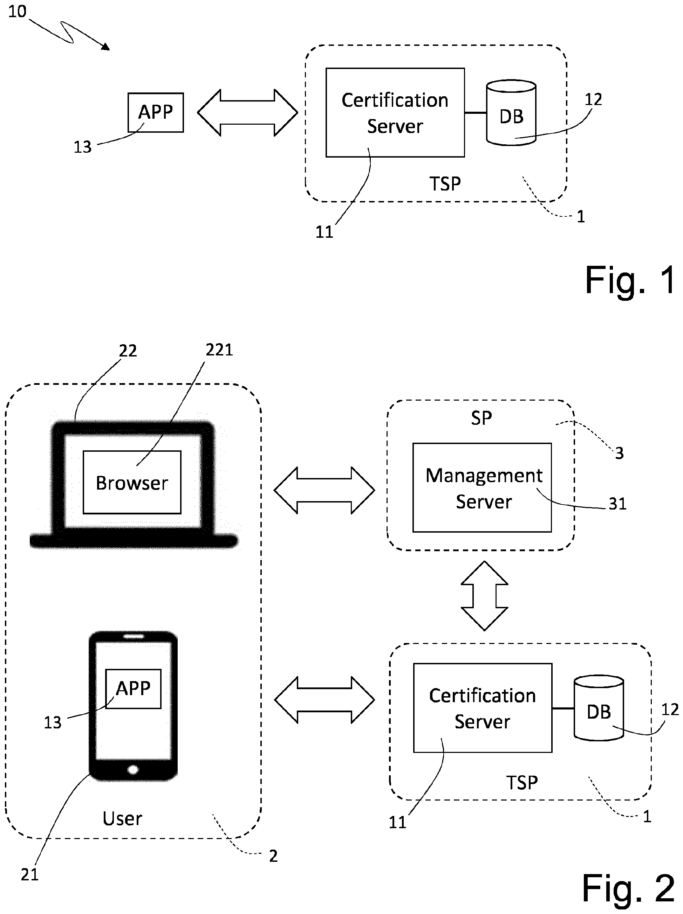

- Figures 1 and 2 schematically show a high-level architecture of an electronic signature system for transactions between users and remote providers of products and/or services according to a preferred (but non-binding) embodiment of the present invention; and

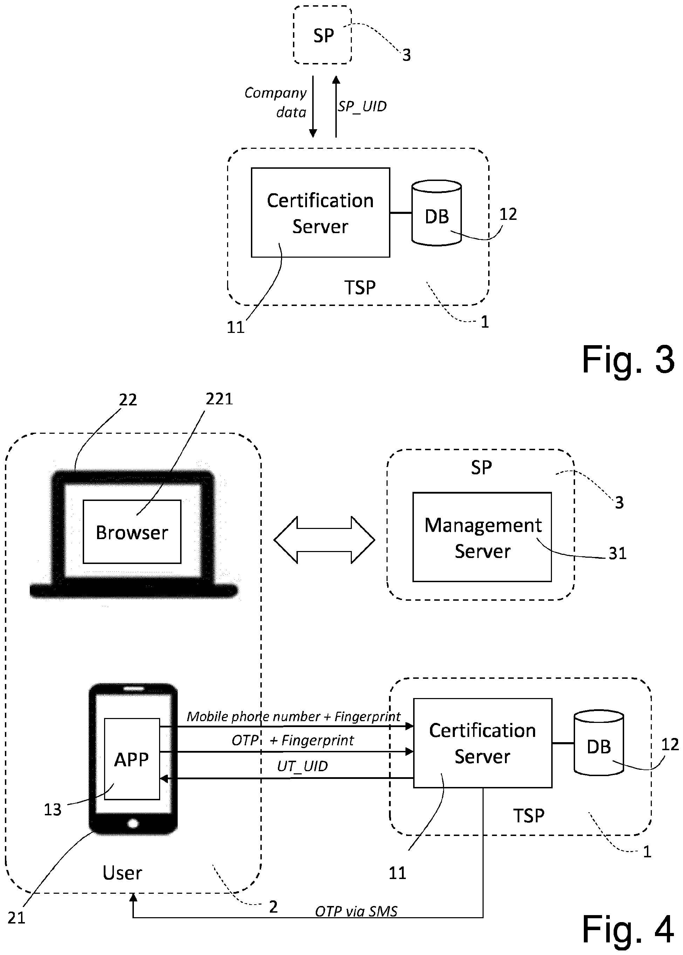

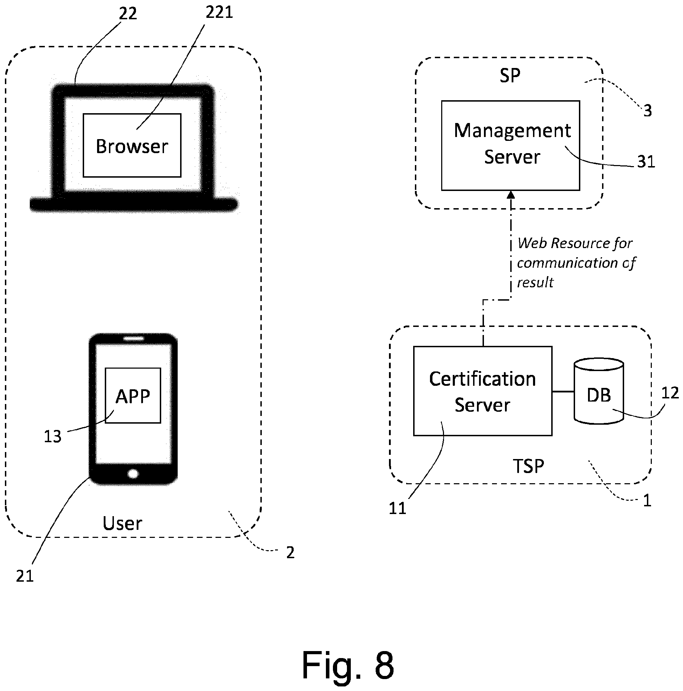

- Figures 3-7 and 9-17 schematically show various steps of a transaction certification method/service implemented/provided by the electronic signature system shown in Figures 1 and 2 according to a (non-binding) embodiment of the present invention, while Figure 8 schematically shows an alternative implementation of some steps of said transaction certification method/service.

### DETAILED DESCRIPTION OF PREFERRED EMBODIMENTS OF THE INVENTION

The following description is provided to enable an expert in the field to embody and use the invention. Various modifications to the embodiments shown will be immediately obvious to experts and the generic principles described herein could be applied to other embodiments and applications, without departing from the scope of protection of the present invention, as defined in the appended claims.

Thus, the present invention is not intended to be limited to the embodiments described and shown herein, but is to be accorded the widest scope of protection consistent with the principles and characteristics disclosed herein and defined in the appended claims.

The present invention concerns an electronic signature method, system and service for certifying transactions between users and remote providers of tangible and/or intangible products and/or services, by means of the use of two-dimensional codes.

For brevity, in the description below, said remote providers of tangible and/or intangible products and/or services will be indicated with the acronym SP, an abbreviation for "Service Provider".

Furthermore, in the description below, the present invention will be described with reference to a single user and to a single SP solely for simplicity of description and therefore without loss of generality, it being understood that the present invention can be advantageously exploited by any number of users and by any number of SPs.

Figures 1 and 2 schematically show a high-level architecture of an electronic signature system 10 designed to certify transactions between a user 2 and an SP 3 (for example, a physical or virtual shop, a bank, hotel, travel agency, transport company, etc.) according to a preferred (but non-binding) embodiment of the present invention.

The aforementioned electronic signature system 10 is owned, controlled and managed by a provider 1 of a transaction certification service. For brevity, said provider 1 of the transaction certification service is indicated in the accompanying drawings and hereinafter in the description, with the acronym TSP, an abbreviation for "Trust Service Provider"; similarly, said transaction certification service is indicated hereinafter in the description as the TT service, an abbreviation of "Trust Transaction".

The electronic signature system 10 includes at least one certification server 1 connected to at least one database (or databank) DB 12. A single certification server 11 and a single DB 12 are shown in the accompanying drawings solely and exclusively for simplicity of illustration. In fact, the electronic signature system 10 could conveniently include a plurality of certification servers 11, each of which is connected to one or more respective DBs 12 and is configured to provide the TT service to respective users 2 and SPs 3.

Furthermore, the electronic signature system 10 also includes a software application 13 intended to be installed on a first electronic communications device 21 of the user 2. For brevity, said software application 13 is indicated in the accompanying drawings and hereinafter in the description by the abbreviation APP.

In particular, said first electronic communications device 21 is a mobile communications device equipped with a digital camera and is configured to allow said APP 13 to connect to, and communicate with, the certification server 11 wirelessly via one or more telematics networks, preferably one or more networks based on the Internet Protocol (IP), conveniently the Internet network (if necessary, through one or more local, domestic, company, public, private, etc. networks). For example, said first electronic communications device 21 could conveniently be a smartphone, a tablet or a smartwatch based on one or more of the following wireless communication technologies: GPRS, EDGE, HSPA, UMTS, LTE, LTE Advanced, Wi-Fi, WiMAX, etc.

In order to carry out a transaction with the SP 3, the user 2 uses a web browser or browser 221 (i.e. a software program for web navigation) installed on a second electronic communications device 22 of said user 2 (for example a tablet, laptop, desktop computer or smart TV) configured to allow said browser 221 to connect to, and communicate with, a management server 31 of said SP 3 via the Internet network (if necessary, through one or more local, domestic, company, public, private, etc. networks). In addition, said management server 31 is configured to connect to, and communicate with, said certification server 11 of the electronic signature system 10 via one or more telematics networks, preferably one or more IP-protocol-based networks, conveniently the Internet network.

An example (and therefore non-binding) of embodiment of the TT method/service implemented/provided by the electronic signature system 10 will be describe below in detail, with reference to Figures 3-7 and 9-17.

The aforementioned TT method/service conveniently includes a preliminary enrolment step to the TT service by the SP 3 and the user 2.

Preferably, as shown in Figure 3, said preliminary enrolment step includes the following enrolment operations of the SP 3 to the TT service:
- said SP 3 asks the TSP 1 (for example, via a direct sales channel or via application provisioning services supplied by an e-shop of said TSP 1) to join the TT service, at the same time providing SP company data; and,
- once this request is received, the TSP 1
   - assigns a provider code SP_UID to said SP 3 that univocally identifies said SP 3 and, conveniently, also respective univocal application access credentials,
   - supplies said provider code SP_UID and, conveniently, also said respective univocal application access credentials, to said SP 3, and
   - registers said SP 3 on the certification server 11, storing the respective provider code SP_UID, and, conveniently, also the respective company data and the respective univocal application access credentials, on the DB 12.

If the exchange of information between said SP 3 and the TSP 1 is application-based, this exchange is conveniently implemented over a protected (i.e. encrypted) channel.

In addition, as shown in Figure 4, said preliminary enrolment step preferably also includes the following enrolment operations of the user 2 to the TT service:
- the user 2 uses the browser 221 installed on the second electronic communications device 22 to connect to the management server 31 of the SP 3 in order to, for example, use one or more services and/or one or more products supplied by said SP 3;
- the management server 31 of said SP 3 informs the user 2 that, in order to continue, it is necessary to join the TT service (conveniently, the management server 31 can be configured to preliminarily register said user 2 by providing the latter with a registration page to collect data and providing, at the end of the registration, respective access credentials in order to access said management server 31);
- the user 2 downloads and installs the APP 13 on the first electronic communications device 21 (conveniently, the APP 13 is made available for download on one or more digital electronic distribution platforms for mobile software applications such as, for example, Apple's App Store for devices based on the iOS operating system and/or Google's Google Play for devices based on the Android operating system);
- once the APP 13 is downloaded and installed, the latter will ask the user 2 to enter a mobile phone number of said user 2;
- the user 2 enters his/her mobile phone number in the APP 13 (conveniently, in a specially provided field displayed by said APP 13 on the screen of the first electronic communications device 21);
- the APP 13 then opens a protected (i.e. encrypted) communication session with the certification server 11, sending to the latter the mobile phone number entered by the user 2 together with a fingerprint that identifies said first electronic communications device 21 on which said APP 13 is installed (conveniently, said fingerprint is computed by the APP 13 and includes information related to said first electronic communications device 21 on which said APP 13 is installed (hardwareID) and to the instance of the installed APP 13 (softwareID));
- the certification server 11 sends an OTP, numeric or alphanumeric, via SMS to the mobile phone number stated by the user 2;
- once the SMS containing the OTP is received, the user 2 enters the OTP received via SMS in the APP 13 (conveniently, in a specially provided field displayed by said APP 13 on the screen of the first electronic communications device 21) to confirm the stated mobile phone number;
- the APP 13 sends the OTP entered by the user 2, together with said fingerprint that identifies said first electronic communications device 21 on which said APP 13 is installed, to the certification server 11;
- the certification server 11 checks the correctness of the OTP entered by the user 2, together with the session data and, if the entered OTP is correct, generates a user code UT_UID that univocally identifies said user 2 and sends it to the APP 13 and, in addition, registers said user 2, storing the respective user code UT_UID on the DB 12;
- the APP 13 then asks the user 2 to choose a PIN (and, conveniently, also a secret question to recover the PIN) which will then serve to unlock the APP 13 each time it is started;
- the APP 13 generates an encryption key based on the PIN entered by the user 2, said encryption key being used by the APP 13 to store data in an encrypted form on the first electronic communications device 21 (conveniently in a so-called sandbox only accessible to the APP 13);
- the APP 13 saves, or rather stores, the user code UT_UID in an encrypted form (by means of the use of the encryption key generated on the basis of the PIN of the user 2) on the first electronic communications device 21 (conveniently in the sandbox);
- activation of the APP 13 then terminates with the transmission, from said APP 13 to the certification server 11, of the positive result of the enrolment procedure of the user 2 to the TT service; and, finally,
- the certification server 11 enables the user 2, or rather the respective APP 13, to use the TT service.

Thus, at the end of the preliminary enrolment step, every user 2 has a respective APP 13 enabled to manage transactions with all the SPs 3 that have enrolled for the TT service provided by the electronic signature system 10.

Conveniently, the data exchange between the APP 13 and the certification server 11 is implemented over a protected (i.e. encrypted) channel.

Conveniently, the APP 13 can request the user 2 to enter his/her personal data and, optionally, also a photograph that the certification server 11 will then store on the DB 12.

Furthermore, after the preliminary enrolment step, the user 2 can choose whether to enable use of the TT service for all subsequent transactions with the SP 3 by default, so as not to have to perform a preliminary step of starting a new certified transaction via the TT service every time.

In particular, if the user 2 chooses to enable use of the TT service with the SP 3 by default, a user alias UT_ALIAS associated with said user 2 (for example a nickname, numerical code, alphanumeric string, etc.) is shared, via a one-off operation, with said SP 3 in such a way that the latter can use this user alias UT_ALIAS for all subsequent transactions with the user 2, without the need of having to explicitly request the user 2 to confirm the start of a new certified transaction via the TT service each time. In this case, the TT method/service conveniently includes a step of enabling the TT service between the user 2 and the SP 3 by default.

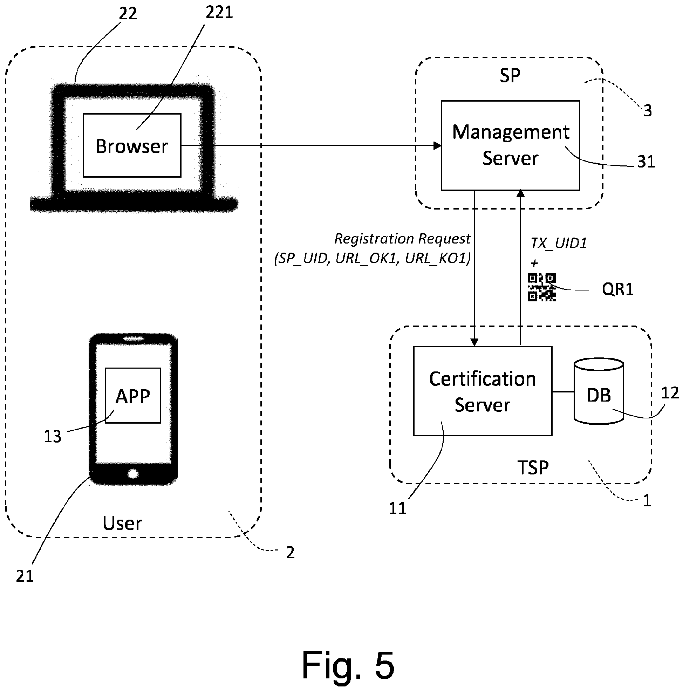

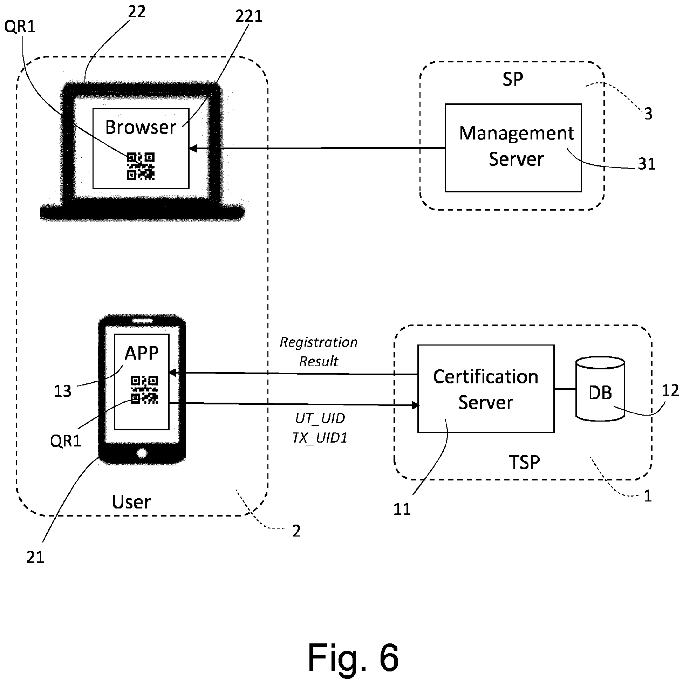

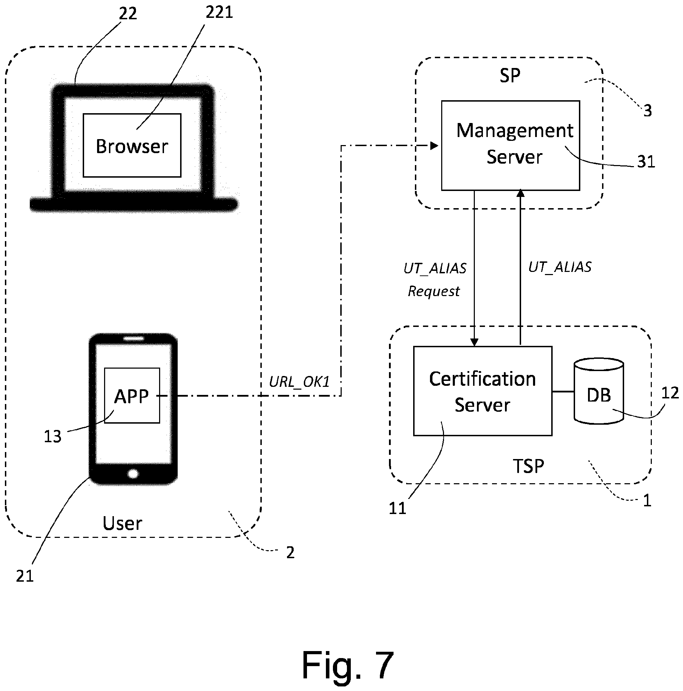

In detail, referring to Figures 5-7, said step of enabling the TT service between the user 2 and the SP 3 by default conveniently includes the following operations:
- as shown in Figure 5, the user 2 uses the browser 221 to access a respective private area exposed by the management server 31 of the SP 3 and to request the management server 31 to enable the TT service for all transactions between said user 2 and the SP 3 by default;
- as shown once again in Figure 5, the management server 31 then makes a user-provider coupled registration request to the certification server 11 of the electronic signature system 10, sending to said certification server 11
   - its provider code SP_UID,
   - a first address of end of registration URL_OK1 (conveniently, an URL address (acronym for "Uniform Resource Locator") or, alternatively, an IP address) of a first web resource (conveniently, a first web page) exposed, or rather hosted, by said management server 31 and related to a positive result for the request for user-provider coupled registration, and
   - a second address of end of registration URL_KO1 (conveniently, a URL or IP address) of a second web resource (conveniently, a second web page) exposed, or rather hosted, by said management server 31 and related to a negative result for the request for user-provider coupled registration;
- always as shown in Figure 5, in response to the user-provider coupled registration request made by the management server 31, the certification server 11 generates and returns to said management server 31
   - a user-provider coupled registration code TX_UID1 that is associated with the provider code SP_UID and that univocally identifies said user-provider coupled registration request, and
   - a first two-dimensional code QR1 (for example, a so-called QR code (acronym for "Quick Response") or another type of two-dimensional code) that contains (or rather in which are encoded) the first address of end of registration URL_OK1, the second address of end of registration URL_KO1, the user-provider coupled registration code TX UID1 and, conveniently, also an identifier of the two-dimensional code type (more specifically, the first two-dimensional code QR1 is related to a user-provider coupled registration request);
- in addition, the certification server 11 stores the provider code SP_UID and the user-provider coupled registration code TX_UID1 (and, conveniently, also the first two-dimensional code QR1) in an associated manner on the DB 12;
- as shown in Figure 6, once the management server 31 receives the user-provider coupled registration code TX UID1 and the first two-dimensional code QR1 from the certification server 11, it shows (or displays, i.e. exposes), said first two-dimensional code QR1 inside the private area of the user 2;
- as shown once again in Figure 6, the user 2 then unlocks the APP 13 (by using the PIN chosen in the preliminary enrolment step) and captures, by means of the digital camera of the first electronic communications device 21, the first two-dimensional code QR1 displayed, by the browser 221, on the screen of the second electronic communications device 22;
- as shown once again in Figure 6, the APP 13 decodes the captured first two-dimensional code QR1, extracting the first address of end of registration URL_OK1, the second address of end of registration URL_KO1 and the user-provider coupled registration code TX_UID1, and sends the user code UT_UID together with the user-provider coupled registration code TX_UID1 extracted from the first two-dimensional code QR1 (or directly the first two-dimensional code QR1) to the certification server 11;
- always as shown in Figure 6, the certification server 11 checks whether the user-provider coupled registration code TX UID1 received from the APP 13 is stored on the DB 12; then, if it finds that the user-provider coupled registration code TX UID1 received from the APP 13 is stored on the DB 12, the certification server 11 performs the user-provider coupled registration, associating, on the DB 12, the provider code SP_UID of the SP 3, said user-provider coupled registration code TX_UID1 and also the user code UT_UID of the user 2, and sends confirmation of the positive result of the request for user-provider coupled registration to the APP 13; furthermore, always in the event of a positive result of the request for user-provider coupled registration, the certification server 11 generates (and stores on the DB 12) a user alias UT_ALIAS (for example, as already mentioned above, a nickname, numerical code, alphanumeric string, etc.) associated with the user 2; if, instead, the user-provider coupled registration code TX UID1 received from the APP 13 is not stored on the DB 12, the certification server 11 sends an error message to the APP 13 that attests the negative result of the request for user-provider coupled registration;
- as shown in Figure 7, if the APP 13 receives confirmation of the positive result of the request for user-provider coupled registration from the certification server 11,
   - said APP 13 invokes the first address of end of registration URL_OK1, or rather connects to the first web resource, to confirm the positive result of the request for user-provider coupled registration to the management server 31,
   - the management server 31 then requests the certification server 11 to return the user alias UT_ALIAS of the user 2 who confirmed the positive result of request for user-provider coupled registration identified by the user-provider coupled registration code TX_UID1, sending its own provider code SP_UID and said user-provider coupled registration code TX_UID1 to said certification server 11,
   - in response to said request from the management server 31, the certification server 11 verifies the state of the user-provider coupled registration request identified by the user-provider coupled registration code TX_UID1 and associated with the SP 3 and, if the state of said user-provider coupled registration request is confirmed, returns the user alias UT_ALIAS of the user 2 to the management server 31, and
   - the management server 31 registers said user alias UT_ALIAS of the user 2 in its records;
- if, instead, the APP 13 receives the error message from the certification server 11, said APP 13 invokes the second address of end of registration URL_KO1, or rather it connects to the second web resource, to inform the management server 31 of the negative result of the request for user-provider coupled registration.

Thus, at the end of the step of enabling the TT service between the user 2 and the SP 3 by default, the latter will be enabled to carry out transactions with said user 2, communicating its provider code SP_UID and the user alias UT_ALIAS of the user 2 to the certification server 11, for each transaction. In this way, it is not necessary to explicitly request the user 2 to confirm the start of each new transaction with the SP 3.

Furthermore, use of the user alias UT_ALIAS enables maintaining privacy and not divulging the true user code UT_UID of the user 2. In this way, said user 2 will always have the possibility of cancelling the user-provider coupled registration with the SP 3, whilst maintaining the privacy of his/her user code UT_UID.

However, in this way the TSP 1 can keep track of all the associations between the various SPs and users so as to be able to conveniently provide additional services, such as checking the registrations of a user at the start of each transaction, the cancellation of a user registration by an SP, enabling individual SPs to send notifications to their registered users, etc.

The data exchange between the APP 13 and the certification server 11 is conveniently implemented over a protected (i.e. encrypted) channel and, furthermore, the first two-dimensional code QR1 contains information only decipherable by said APP 13 and said certification server 11.

The management server 31 conveniently generates a first address of end of registration URL_OK1 and a second address of end of registration URL K01 such as to identify the user 2 on its portal/website when these addresses are invoked by the APP 13.

In order to communicate the outcome of the request for user-provider coupled registration to the SP 3, an alternative embodiment of the step of enabling the TT service between the user 2 and the SP 3 by default could conveniently envisage the use of:
- two web resources different from the first and second addresses of end of registration URL_OK1 and URL_KO1 of the previously described URL/IP-type; or
- a single web resource (in which the outcome of the request for user-provider coupled registration is parametrically differentiated).

In particular, according to said alternative embodiment of the step of enabling the TT service between the user 2 and the SP 3 by default, said web resource(s) for communicating the outcome of the request for user-provider coupled registration to the SP 3 is/are conveniently exposed by the management server 31 following predetermined specifications provided by the TSP 1 and could conveniently be a single parameterized URL or IP address, two distinct URL or IP addresses, a REST (REpresentational State Transfer) resource, a SOAP (Simple Object Access Protocol) service, or another type of web resource or service.

Moreover, according to a further alternative embodiment of the step of enabling the TT service between the user 2 and the SP 3 by default, said web resource(s) for communicating the outcome of the request for user-provider coupled registration to the SP 3 could be directly invoked by the certification server 11 (as schematically and synthetically show in Figure 8) instead of by the APP 13. In this case, it is not necessary to share the reference(s) to said web resource(s) with the APP 13, and therefore the certification server 11 does not include the reference(s) to said web resource(s) in the first two-dimensional code QR1.

As previously explained, once the step of enabling the TT service between the user 2 and the SP 3 by default has been performed, the management server 31 possesses the user alias UT_ALIAS of the user 2, thanks to which it can consequently automatically start a new certified transaction between said user 2 and said SP 3.

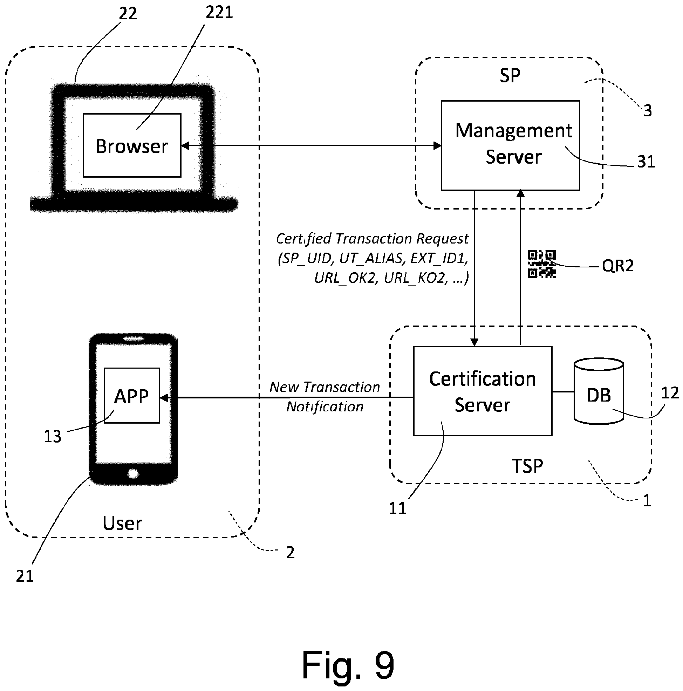

In particular, referring to Figures 9-11, once the step of enabling the TT service between the user 2 and the SP 3 by default has been performed, every time that said user 2 decides to start a transaction with said SP 3, the TT method/service includes a step of executing a certified transaction that conveniently includes the following operations:
- as shown in Figure 9, the user 2 uses the browser 221 to
   - connect to the management server 31 (conveniently, to a portal of the SP 3 exposed by said management server 31), accessing it through respective access credentials, and
   - requesting a service/product from the SP 3, and thus starting a corresponding transaction with said SP 3 (conveniently, the user 2 enters the data requested by the management server 31 in relation to the requested service/product, for example, by filling in, by means of the browser 221, one or more predetermined forms exposed by the management server 31);

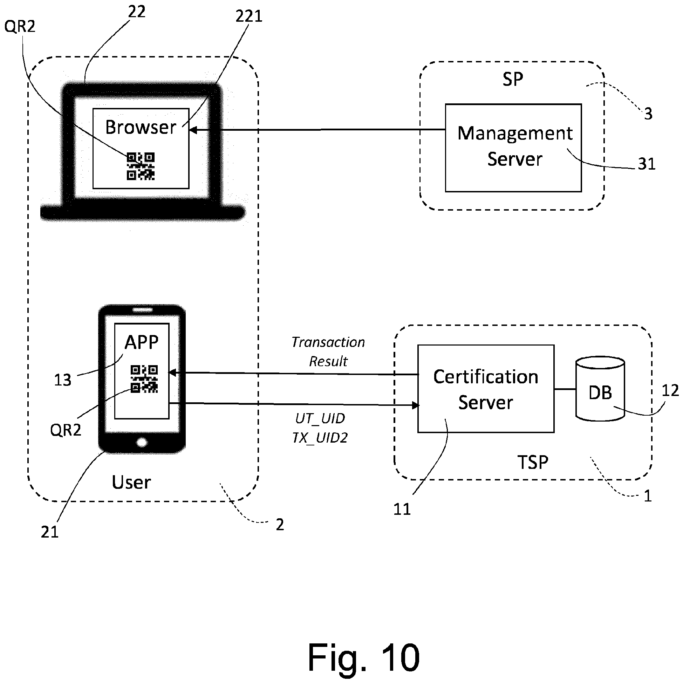

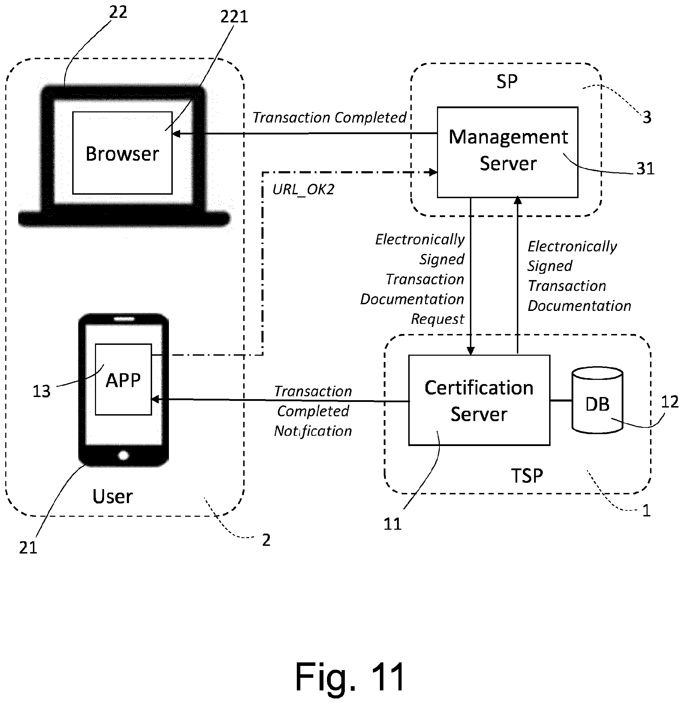

- in response to the service/product request from the user 2, the management server 31 generates corresponding service/product supply conditions and informs the user 2 that in order for the transaction to be completed, it must necessarily be certified by the electronic signature system 10;
- the user 2 confirms, by means of the browser 221, his/her desire to proceed with the certification of the transaction by the electronic signature system 10;
- as shown once again in Figure 9, the management server 31 then requests the certification server 11 to certify the transaction with the user 2, sending the following to said certification server 11
   - its own provider code SP_UID,
   - the user alias UT_ALIAS of the user 2,
   - a provider-side transaction identifier EXT_ID1 assigned and used by said management server 31 to univocally identify the transaction,
   - a first address of end of transaction URL_OK2 (conveniently, a URL or IP address) of a third web resource (conveniently, a third web page) exposed, or rather hosted, by said management server 31 and related to a positive transaction result,
   - a second address of end of transaction URL_KO2 (conveniently, a URL or IP address) of a fourth web resource (conveniently, a fourth web page) exposed, or rather hosted, by said management server 31 and related to a negative transaction result,
   - a document related to the transaction (for example, a document in a Word, pdf, etc. format; said document could also conveniently be a simple set of collected data, for example, in an xml, csv, txt, etc. file),
   - a digest of said document generated via a predetermined hash algorithm,
   - metadata related to the transaction,
   - signature fields and, if necessary, also other data and/or information relating to the transaction;
- as shown once again in Figure 9, in response to the transaction certification request, the certification server 11 generates a first transaction code TX_UID2 that univocally identifies the transaction between the user 2 and the SP 3 and, in addition, generates and returns to the management server 31 a second two-dimensional code QR2 (for example, a so-called QR code or other type of two-dimensional code) that contains (or rather in which are encoded)
   - the first transaction code TX UID2 and,
   - conveniently, also an identifier of the two-dimensional code type (more specifically, the second two-dimensional code QR2 is related to the execution of a transaction) and/or the transaction state (for example, a "running" state, i.e. in execution);
- furthermore, always as shown in Figure 9, the certification server 11 sends a push notification to the APP 13 to notify the user 2 of a new transaction in execution between said user and the SP 3; said push notification contains the first transaction code TX_UID2, the provider-side transaction identifier EXT_ID1, the first address of end of transaction URL_OK2, the second address of end of transaction URL_KO2 and, conveniently, also other data relating to the transaction;
- furthermore, the certification server 11 stores the provider code SP_UID, the user alias UT_ALIAS, the user code UT_UID, the first transaction code TX_UID2, the provider-side transaction identifier EXT_ID1, the document related to the transaction, the digest of said document and the metadata related to the transaction (and, conveniently, also the second two-dimensional code QR2) in an associated manner on the DB 12;
- as shown in Figure 10, once the second two-dimensional code QR2 is received from the certification server 11, the management server 31 shows the user 2, by the browser 221, said second two-dimensional code QR2;
- the user 2 then unlocks the APP 13 (using the PIN chosen in the preliminary enrolment step), reads the push notification that arrived from the certification server 11 (conveniently, reading the data contained in said push notification) and chooses whether to confirm, cancel or report the transaction as not authorized to the certification server 11;
- as shown once again in Figure 10, if the transaction is confirmed by the user 2, the latter captures, by means of the digital camera of the first electronic communications device 21, the second two-dimensional code QR2 displayed, by the browser 221, on the screen of the second electronic communications device 22;
- the APP 13 decodes the captured second two-dimensional code QR2, extracting the first transaction code TX UID2 contained in said second two-dimensional code QR2, verifies that the first transaction code TX_UID2 extracted from the second two-dimensional code QR2 coincides with the one contained in the push notification and, always as shown in Figure 10, sends confirmation of the transaction, together with its own user code UT_UID and the first transaction code TX_UID2 extracted from the second two-dimensional code QR2 (or directly said second two-dimensional code QR2), to the certification server 11;
- the certification server 11 verifies the data received from the APP 13 by comparing them with those stored on the DB 12 and, if the data received from the APP 13 correspond to those stored on the DB 12, adds, by means of a non-qualified certificate, an electronic signature to the document related to the transaction received from the management server 31 and also to the metadata related to the transaction (these also received from the management server 31), in this way obtaining a corresponding electronically signed transaction document and corresponding electronically signed transaction metadata; furthermore, the certification server 11 sets the transaction to the "confirmed" state and, always as shown in Figure 10, sends confirmation of the positive result of the transaction to the APP 13; if, instead, the data received from the APP 13 do not correspond to those stored on the DB 12, the certification server 11 sends an error message to the APP 13 that attests the negative result of transaction;
- as shown in Figure 11, if the APP 13 receives confirmation of the positive result of the transaction from the certification server 11,
   - said APP 13 invokes the first address of end of transaction URL_OK2 (contained in the push notification), or rather it connects to the third web resource, to confirm the positive result of the transaction to the management server 31,
   - the management server 31 then requests the certification server 11 to return the electronically signed transaction document and the electronically signed transaction metadata,
   - the certification server 11 then returns said electronically signed transaction document and said electronically signed transaction metadata to the management server 31, stores everything on the DB 12 and sets the transaction to the "completed" state,
   - the management server 31 informs the user 2, by means of the browser 221, that the transaction has been completed correctly (for example, by opportunely updating the page displayed by the browser 221), and
   - the APP 13 receives a notification from the certification server 11 that the transaction has been completed correctly and saves the related metadata in memory;
- if, instead, the APP 13 receives the error message from the certification server 11 that attests the negative result of transaction, said APP 13 invokes the second address of end of transaction URL_KO2 (contained in the push notification), or rather it connects to the fourth web resource, to inform the management server 31 of the negative transaction result.

In order to communicate the outcome of the transaction to the SP 3, an alternative embodiment of the step of executing the certified transaction could conveniently envisage the use of:
- two web resources different from the first and second addresses of end of transaction URL_OK2 and URL_KO2 of the previously described URL/IP type; or
- a single web resource (in which the outcome of the transaction is parametrically differentiated).

In particular, according to said alternative embodiment of the step of executing the certified transaction, said web resource(s) for communicating the outcome of the transaction to the SP 3 is/are conveniently exposed by the management server 31 following predetermined specifications provided by the TSP 1 and could conveniently be a single parameterized URL or IP address, two distinct URL or IP addresses, a REST resource, a SOAP service, or another type of web resource or service.

Moreover, according to a further alternative embodiment of the step of executing the certified transaction, said web resource(s) for communicating the outcome of the transaction to the SP 3 could be directly invoked by the certification server 11 (as shown once again in Figure 8) instead of by the APP 13. In this case, it is not necessary to share the reference(s) to said web resource(s) with the APP 13, and therefore the certification server 11 does not include the reference(s) to said web resource(s) in the push notification sent to the APP 13.

Instead, in the case where a user 2 does not wish to enable use of the TT service with an SP 3 by default, the TT method/service conveniently includes a step of starting a certified transaction and a step of completing the certified transaction.

In other words, if a user 2 chooses to enable use of the TT service with an SP 3 by default, the execution and the certification of each transaction between said user 2 and said SP 3 is quicker because it is sufficient to execute just one step, namely the aforementioned step of executing a certified transaction. If, instead, a user 2 prefers not to enable use of the TT service with an SP 3 by default (because, for example, in this way the user 2 feels more protected, as no user alias UT_ALIAS needs to be shared with said SP 3), it is necessary to perform two steps for every transaction, namely the aforementioned steps of starting a certified transaction and of completing said certified transaction.

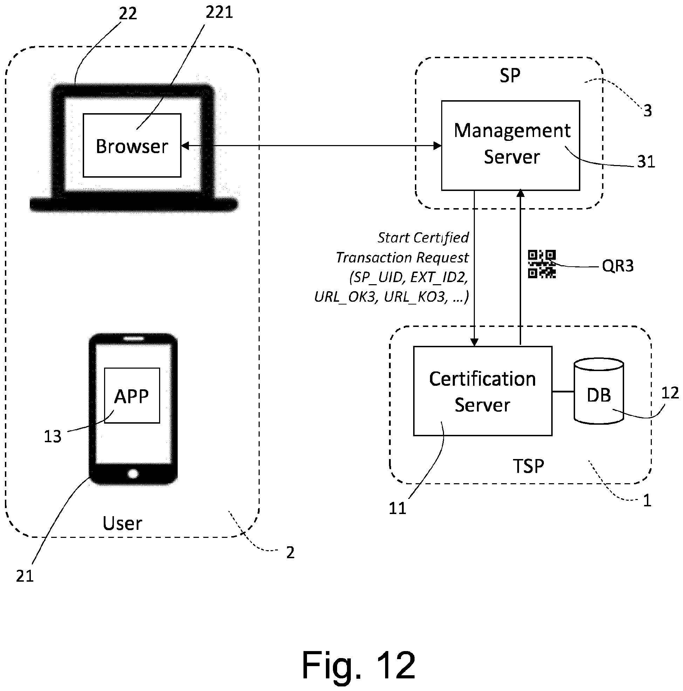

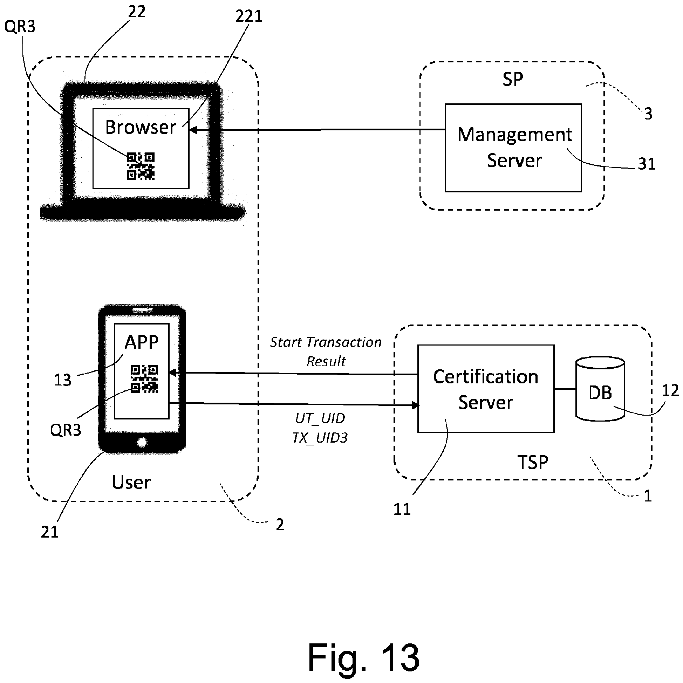

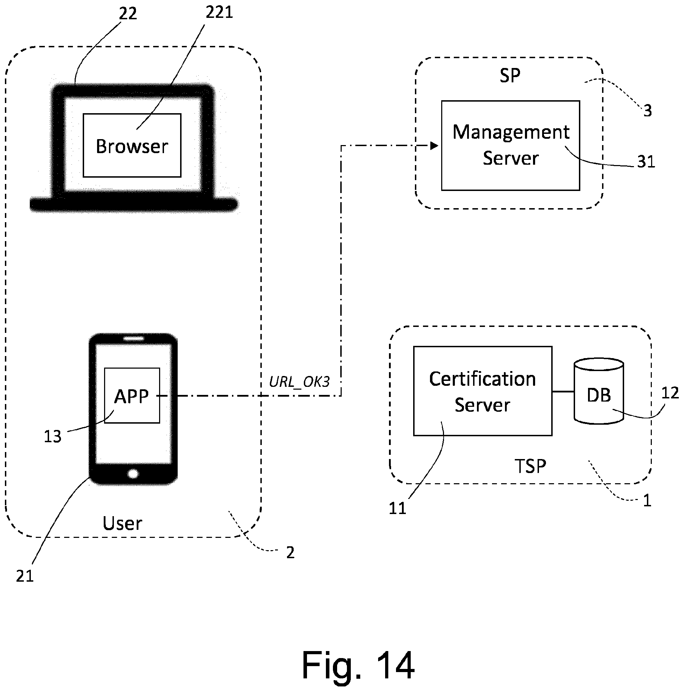

In particular, referring to Figures 12-14, said step of starting a certified transaction conveniently includes the following operations:
- as shown in Figure 12, the user 2 uses the browser 221 to
   - connect to the management server 31 (conveniently, to a portal of the SP 3 exposed by said management server 31), accessing it through respective access credentials, and
   - requesting a service/product from the SP 3, and thus starting a corresponding transaction with said SP 3 (conveniently, the user 2 enters, by means of the browser 221, the data requested by the management server 31 in relation to the requested service/product, for example, by filling in one or more predetermined forms exposed by the management server 31);
- in response to the service/product request from the user 2, the management server 31 informs the user 2 that in order to proceed, it is necessary to use the TT service provided by the electronic signature system 10;
- the user 2 confirms, by means of the browser 221, his/her desire to proceed with using the TT service provided by the electronic signature system 10;
- as shown once again in Figure 12, the management server 31 then makes a request to start a certified transaction to the certification server 11, sending to said certification server 11
   - its provider code SP_UID,
   - a provider-side transaction identifier EXT ID2 assigned and used by said management server 31 to univocally identify the transaction,
   - a first address of transaction start URL_OK3 (conveniently, a URL or IP address) of a fifth web resource (conveniently, a fifth web page) exposed, or rather hosted, by said management server 31 and related to a positive transaction start result,
   - a second address of transaction start URL_KO3 (conveniently, a URL or IP address) of a sixth web resource (conveniently, a sixth web page) exposed, or rather hosted, by said management server 31 and related to a negative transaction start result, and,
   - if necessary, also other data and/or information relating to starting the transaction;
- in response to the request from the management server 31 to start a certified transaction, the certification server 11 generates a second transaction code TX_UID3 that univocally identifies said request to start a certified transaction and, in addition, as shown once again in Figure 12, generates and returns to the management server 31 a third two-dimensional code QR3 (for example, a so-called QR code or another type of two-dimensional code) that contains (or rather in which are encoded)
   - the first address of transaction start URL_OK3,
   - the second address of transaction start URL_KO3,
   - the second transaction code TX_UID3 and,
   - conveniently, also an identifier of the two-dimensional code type (more specifically, the third two-dimensional code QR3 is related to the start of a transaction) and the transaction state (for example, a "waiting" state);
- furthermore, the certification server 11 stores the provider code SP_UID, the second transaction code TX_UID3, the provider-side transaction identifier EXT_ID2 and the transaction state (for example, "waiting") (and, conveniently, also the third two-dimensional code QR3) in an associated manner on the DB 12;
- as shown in Figure 13, once the third two-dimensional code QR3 is received from the certification server 11, the management server 31 shows the user 2, by means of the browser 221, said third two-dimensional code QR3;
- as shown once again in Figure 13, the user 2 then unlocks the APP 13 (using the PIN chosen in the preliminary enrolment step) and captures, by means of the digital camera of the first electronic communications device 21, the third two-dimensional code QR3 displayed, by the browser 221, on the screen of the second electronic communications device 22;
- the APP 13 decodes the captured third two-dimensional code QR3, extracting the data contained therein and, always as shown in Figure 13, sends confirmation of the start of the transaction, together with its own user code UT_UID and the second transaction code TX_UID3 extracted from the third two-dimensional code QR3 (or directly said third two-dimensional code QR3), to the certification server 11;
- the certification server 11 verifies the data received from the APP 13 by comparing them with those stored on the DB 12 and also checks the transaction state; if the data received from the APP 13 correspond to those stored on the DB 12, said certification server 11 updates the transaction state stored on the DB 12 (for example, updating it to "started"), also stores the user code UT_UID of the user 2 on the DB 12, associating it with the other data of the transaction already stored on the DB 12 (i.e. the provider code SP_UID, the second transaction code TX_UID3, the provider-side transaction identifier EXT_ID2 and the updated transaction state) and, always as shown in Figure 13, sends confirmation of the positive result of the start of the transaction to the APP 13; if, instead, the data received from the APP 13 do not correspond to those stored on the DB 12, the certification server 11 sends an error message to the APP 13 that attests the negative result of the start of the transaction;
- as shown in Figure 14, if the APP 13 receives confirmation of the positive result of the start of the transaction from the certification server 11, said APP 13 invokes the first address of transaction start URL_OK3 (extracted from the third two-dimensional code QR3), or rather it connects to the fifth web resource, to confirm the positive result of the start of the transaction to the management server 31;
- if, instead, the APP 13 receives the error message from the certification server 11 that attests the negative result of the start of the transaction, said APP 13 invokes the second address of transaction start URL_KO3, or rather it connects to the sixth web resource, to inform the management server 31 of the negative result of the start of the transaction.

In order to communicate the outcome of the start of the transaction to the SP 3, an alternative embodiment of the step of starting the certified transaction could conveniently envisage the use of:
- two web resources different from the first and second start transaction addresses URL_OK3 and URL_KO3 of the previously described URL/IP type; or
- a single web resource (in which the outcome of the start of the transaction is parametrically differentiated).

In particular, according to said alternative embodiment of the step of starting the certified transaction, said web resource(s) for communicating the outcome of the start of the transaction to the SP 3 is/are conveniently exposed by the management server 31 following predetermined specifications provided by the TSP 1 and could conveniently be a single parameterized URL or IP address, two distinct URL or IP addresses, a REST resource, a SOAP service, or another type of web resource or service.

Furthermore, according to a further alternative embodiment of the step of starting the certified transaction, said web resource(s) for communicating the outcome of the start of the transaction to the SP 3 could be directly invoked by the certification server 11 (as shown once again in Figure 8) instead of by the APP 13. In this case, it is not necessary to share the reference(s) to said web resource(s) with the APP 13, and therefore the certification server 11 does not include the reference(s) to said web resource(s) in the third two-dimensional code QR3.

At the end of the step of starting the certified transaction, the certification server 11 has reconciled the transaction (i.e. TX_UID3) both with the data of the SP 3 (i.e. SP_UID) and with the data of the user 2 (i.e. UT_UID).

As previously described, during the step of starting the certified transaction, the transaction conveniently passes from a "waiting" state (assigned by default by the certification server 11 when it receives a certified transaction start request from the SP 3) to the "started" state when the user 2 confirms, via the APP 13, the start of the transaction to the certification server 11.

Once the step of starting the certified transaction has been performed, this transaction can be concluded by the step of completing the certified transaction.

In particular, once the step of starting the certified transaction ends, the certification server 11 conveniently holds the transaction in the "started" state for a predetermined period of time (configurable by the TSP 1) during which said step of completing the certified transaction can be performed; once this predetermined period of time has lapsed without the transaction having been completed, the certification server 11 definitively deletes said transaction.

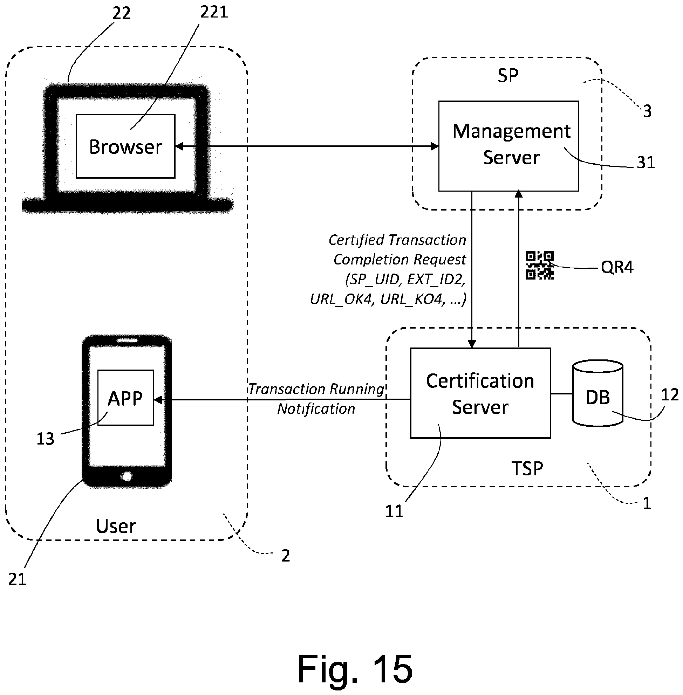

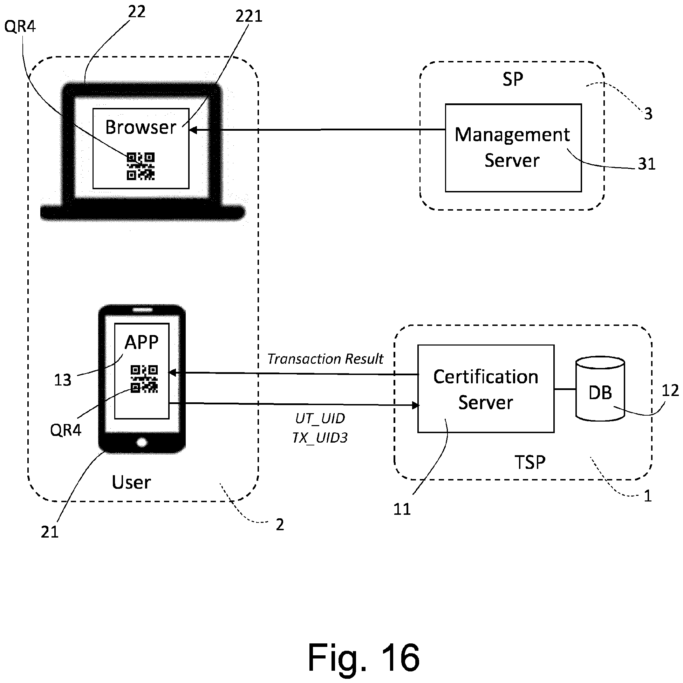

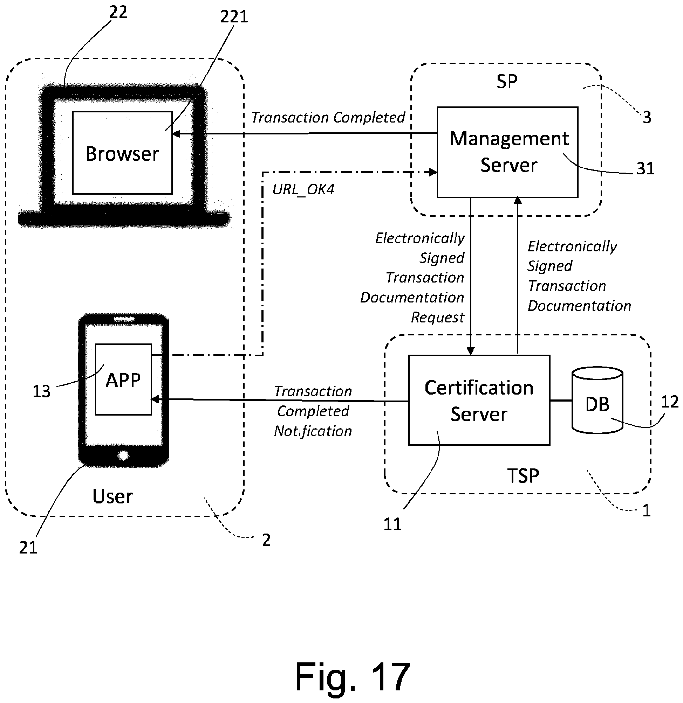

Referring to Figures 15-17, once the step of starting the certified transaction ends, the step of completing the certified transaction conveniently includes the following operations:
- as shown in Figure 15, the user 2 uses the browser 221 to confirm the request to the SP 3 for the service/product already requested at the beginning of the step of starting the certified transaction (the user 2 might conveniently have to enter, by means of the browser 221, (further) data requested by the management server 31 in relation to the requested service/product, for example, by filling in one or more (further) predetermined forms exposed by the management server 31) ;
- the management server 31 then generates corresponding service/product supply conditions and informs the user 2 that in order for the transaction to be completed, it must necessarily be certified by the electronic signature system 10;
- the user 2 confirms, by means of the browser 221, his/her desire to proceed with the certification of the transaction by the electronic signature system 10;
- as shown once again in Figure 15, the management server 31 then requests the certification server 11 to complete the previously started certified transaction, sending to said certification server 11
   - its own provider code SP_UID,
   - the provider-side transaction identifier EXT_ID2,
   - a third address of end of transaction URL_OK4 (conveniently, a URL or IP address) of a seventh web resource (conveniently, a seventh web page) exposed, or rather hosted, by said management server 31 and related to a positive transaction result,
   - a fourth address of end of transaction URL_KO4 (conveniently, a URL or IP address) of an eighth web resource (conveniently, an eighth web page) exposed, or rather hosted, by said management server 31 and related to a negative transaction result,
   - a document related to the transaction (for example, as previously described, a document in a Word, pdf, etc. format; or could be a simple set of collected data, for example, in an xml, csv, txt, etc. file),
   - a digest of said document generated via a predetermined hash algorithm,
   - metadata related to the transaction,
   - signature fields and, if necessary, also other data and/or information relating to the transaction;
- in response to the request of the management server 31, the certification server 11 verifies the data received from said management server 31 by comparing them with those stored on the DB 12 (conveniently, said certification server 11 also checks that the transaction state is "started"); as shown once again in Figure 15, if the data received from the management server 31 correspond to those stored on the DB 12 (and if the transaction is in the "started" state), said certification server 11 updates the transaction state stored on the DB 12 (for example, updating it to "running", i.e. in execution) and generates and returns to the management server 31 a fourth two-dimensional code QR4 (for example, a so-called QR code or another type of two-dimensional code) that contains (or rather in which are encoded)
   - the second transaction code TX_UID3 and,
   - conveniently, also an identifier of the two-dimensional code type (more specifically, the fourth two-dimensional code QR4 is related to the completion of a transaction) and the transaction state (for example, "running");
- furthermore, always as shown in Figure 15, the certification server 11 sends a push notification to the APP 13 to notify the user 2 that the previously started transaction is now in execution (the certification server 11 knows the user 2 who is involved in the transaction thanks to the user code UT UID saved during the step of starting the certified transaction); said push notification contains the second transaction code TX_UID3, the provider-side transaction identifier EXT ID2, the third address of end of transaction URL_OK4, the fourth address of end of transaction URL_KO4 and, conveniently, also other data relating to the transaction;
- furthermore, the certification server 11 also stores the document related to the transaction, the digest of said document, the metadata related to the transaction (and, conveniently, also the fourth two-dimensional code QR4) on the DB 12, associating them with the other data of the transaction already stored on the DB 12 (i.e. the provider code SP_UID, the user code UT_UID, the second transaction code TX_UID3, the provider-side transaction identifier EXT_ID2 and the transaction state (for example, "running"));
- as shown in Figure 16, once the fourth two-dimensional code QR4 is received from the certification server 11, the management server 31 shows the user 2, by means of the browser 221, said fourth two-dimensional code QR4;
- the user 2 then unlocks the APP 13 (using the PIN chosen in the preliminary enrolment step), reads the push notification that arrived from the certification server 11 (conveniently, reading the data relating to the transaction contained in said push notification) and chooses whether to confirm, cancel or report the transaction as not authorized to the certification server 11;
- as shown once again in Figure 16, if the transaction is confirmed by the user 2, the latter captures, by means of the digital camera of the first electronic communications device 21, the fourth two-dimensional code QR4 displayed, by the browser 221, on the screen of the second electronic communications device 22;
- the APP 13 decodes the captured fourth two-dimensional code QR4, extracting the second transaction code TX_UID3 contained in said fourth two-dimensional code QR4, verifies that the second transaction code TX_UID3 extracted from the fourth two-dimensional code QR4 coincides with that contained in the push notification and, always as shown in Figure 16, sends a confirmation of the transaction together with its own user code UT_UID and the second transaction code TX_UID3 extracted from the fourth two-dimensional code QR4 (or directly the fourth two-dimensional code QR4) to the certification server 11;
- the certification server 11 verifies the data received from the APP 13 by comparing them with those stored on the DB 12 and, if the data received from the APP 13 correspond to those stored on the DB 12, adds, by means of a non-qualified certificate, an electronic signature to the document related to the transaction received from the management server 31 and also to the metadata related to the transaction (these also received from the management server 31), in this way obtaining a corresponding electronically signed transaction document and corresponding electronically signed transaction metadata; furthermore, the certification server 11 sets the transaction to the "confirmed" state and, always as shown in Figure 16, sends a confirmation of the positive result of the transaction to the APP 13; if, instead, the data received from the APP 13 do not correspond to those stored on the DB 12, the certification server 11 sends an error message to the APP 13 that attests the negative result of the transaction;
- as shown in Figure 17, if the APP 13 receives confirmation of the positive result of the transaction from the certification server 11,
   - said APP 13 invokes the third address of end of transaction URL_OK4 (contained in the push notification), or rather it connects to the seventh web resource, to confirm the positive result of the transaction to the management server 31,
   - the management server 31 then requests the certification server 11 to return the electronically signed transaction document and the electronically signed transaction metadata,
   - the certification server 11 then returns said electronically signed transaction document and said electronically signed transaction metadata to the management server 31, stores everything on the DB 12 and sets the transaction to the "completed" state,
   - the management server 31 informs the user 2, by means of the browser 221, that the transaction has been completed correctly (for example, by opportunely updating the page displayed by the browser 221), and
   - the APP 13 receives a notification from the certification server 11 that the transaction has been completed correctly and saves the related metadata in memory;
- if, instead, the APP 13 receives the error message from the certification server 11 that attests the negative result of transaction, said APP 13 invokes the fourth address of end of transaction URL_KO4 (contained in the push notification), or rather it connects to the eighth web resource, to inform the management server 31 of the negative result of the transaction.

In order to communicate the outcome of the transaction to the SP 3, an alternative embodiment of the step of completing the certified transaction could conveniently envisage the use of:
- two web resources different from the third and fourth addresses of end of transaction URL_OK4 and URL_KO4 of the previously described URL/IP type; or
- a single web resource (in which the outcome of the transaction is parametrically differentiated).

In particular, according to said alternative embodiment of the step of completing the certified transaction, said web resource(s) for communicating the outcome of the transaction to the SP 3 is/are conveniently exposed by the management server 31 following predetermined specifications provided by the TSP 1 and could conveniently be a single parameterized URL or IP address, two distinct URL or IP addresses, a REST resource, a SOAP service, or another type of web resource or service.

Moreover, according to a further alternative embodiment of the step of completing the certified transaction, said web resource(s) for communicating the outcome of the transaction to the SP 3 could be directly invoked by the certification server 11 (as shown once again in Figure 8) instead of by the APP 13. In this case, it is not necessary to share the reference(s) to said web resource(s) with the APP 13, and therefore the certification server 11 does not include the reference(s) to said web resource(s) in the push notification sent to the APP 13.

However, it is important to stress the point that the two-dimensional codes (in particular, the aforementioned two-dimensional codes QR1, QR2, QR3 and QR4) are created by the certification server 11 using techniques that ensure integrity. From that description above, it will be immediately apparent to the skilled reader that the electronic signature system 10 is able to certify transactions between users 2 and SPs 3 through a dual communications channel, in particular by means of a web browser 221 and by means of a mobile APP 13, using two-dimensional codes.

Furthermore, it is important to underline that the TT service provided by the electronic signature system 10 is totally independent from the SPs 3, or rather does not require specific customization for each individual SP 3.

The innumerable technical advantages of the present invention are immediately apparent from the foregoing description.

In particular, it is important to underline the following advantages of the present invention:
- a user 2 uses just one APP 13 to manage and execute transactions with all the SPs 3 that have joined the TT service;
- the TSP 1 is a "trusted" third party that certifies the individual transactions between the parties;
- SMSs are not used (except for a single SMS only in the preliminary enrolment step of a user 2 to the TT service);
- security tokens are not used;
- biometric data of the users 2 are not used;
- the present invention can be used by an SP 3 both first-hand and remotely;
- if the user 2 is identified "in person" or by means of the Public System for Digital Identity (SPID), the electronic signature added by the system according to the present invention could be equivalent to an advanced electronic signature (AdES) or a qualified electronic signature.

More generally, the technical advantages of the present invention can be synthetically grouped in the following manner:
a) "universality"; more specifically,
   a1) there is only one APP 13 and it dynamically interacts with all the SPs 2 that have enrolled for the TT service without the need for ad hoc development work or configurations;
   a2) the TT service offered by the TSP 1 does not require development work on the SP 3 side, but only identification and configuration of the SP 3 that wishes to enrol;
b) identification of the participants; more specifically,
   b1) each SP 3 that enrols for the TT service is identified in a sure manner by the TSP 1 before an account is granted and this represents a guarantee for the users 2 who interact with said SP 3;
   b2) each user 2 who installs the APP 13 can choose different modes of identification in order to enable one or more levels of transaction signature/authorization, for example,
      - simple electronic signature with enrolment of just the first electronic communications device 21,
      - advanced electronic signature with enrolment of the first electronic communications device 21 and identification by video, selfie, or linking of existing SPID identity or another system of identification,
      - qualified electronic signature with enrolment of the first electronic communications device 21 plus identification performed by the TSP 1 or linking of a qualified certificate;
c) trust in the transaction, because it is managed by a third party (i.e. the TSP 1) that governs the flow of data and their combination in a two-dimensional authorization code, thereby providing protection for both parties (i.e. user 2 and SP 3) regarding the contents of the exchanged data/documents;
d) ease of use for the end user; in fact, as per point a), the user 2 can use a single APP 13 for managing multiple transactions with different SPs 3 and, therefore, different merchants.

Furthermore, with regard to security, it is important to also note that:
- communications between management server 31 and certification server 11 and between APP 13 and certification server 11 all take place over a secure channel;
- all identification codes are exchanged in an encrypted mode (both with the SPs 3 and with the APP 13 of the users 2);
- the user code UT_UID is generated by binding it to the hardware/software fingerprint of the APP 13, as well as to the personal data of the user 2;
- the PIN chosen by the user 2 is saved in encrypted form on the first electronic communications device 21 (conveniently, if the first electronic communications device 21 of the user 2 is equipped with a fingerprint reader, a function could be enabled for unlocking the APP 13 by means of a fingerprint previously registered on said first electronic communications device 21);
- the user 2 has complete control of the transactions thanks to the PIN for unlocking the APP 13, and two alternative ways of carrying out a transaction (i.e. a step of enabling the TT service by default (one-off operation) + step of executing a certified transaction (to be repeated for each transaction); or a step of starting a certified transaction + step of completing the certified transaction (both to be repeated for each transaction)); furthermore, an action by the user 2 is required to capture the two-dimensional codes;
- in the case of the explicit starting of each transaction, the univocal code UT UID of the user 2 is never shared with the SP 3; while in the case of enabling the TT service by default, only the user alias UT_ALIAS is shared, so that the user 2 can always revoke this authorization while still maintaining the privacy of his/her user code UT_UID.

However, with regard to prior art solutions, the innumerable differences between the present invention and the teachings of US 7,021,534 B1 are immediately apparent to an expert in the field from that described above. In fact, with regard to this, it is worth recalling that US 7,021,534 B1 describes the possibility of managing a transaction between a user and a remote provider of products and/or services via a third party, in which the use of (one-dimensional or multidimensional) bar codes is limited solely and exclusively to the exchange of information between the secure device of a user and a server of the third party and wherein it is this server of said third party that materially executes the transaction with a server of a remote provider.

In other words, in no way does US 7, 021, 534 B1 disclose the specific characteristics of the present invention regarding the certification of a transaction, where the TSP 1 does not directly execute the transaction with the SP 3 in place of the user 2 (as is described in US 7,021,534 B1), but handles the certification of a transaction communicating separately with the SP 3 and the user 2.

In particular, it is important to stress the point that after receiving a transaction certification request from an SP 3, the TSP 1 generates a related two-dimensional code (in which a univocal identifier of the transaction is encoded) and supplies it to the SP 3, which, in turn, supplies it to the user 2 via the browser 221. After this, the user 2 must use a device other than that on which the browser 221 is installed to capture the two-dimensional code displayed by said browser 221, after which it is the APP 13 that then "closes" the information flow with the TSP 1 by sending the univocal identifier of the transaction and the univocal identifier of the user 2 to the latter. In this way, the TSP 1 can verify the identity of the two parties (i.e. SP 3 and user 2) and therefore, in the case of consistency/correspondence between the various information received (i.e. SP_UID and UT UID) and generated (TX_UID), the TSP 3 can effectively guarantee the identity of the two parties, and therefore certify the related transaction with a high level of security.

Moreover, it is also worth recalling that, according to the present invention, the identifiers of an SP 3 and a user 2 that carry out a transaction are never exchanged between these two parties, in this way avoiding any possible interception and, at the same time, protecting users 2 in good faith from possibly malicious SPs 3 and vice versa.

Moreover, none of the aforementioned differences between the present invention and US 7,021,534 B1 can be considered characteristics having a merely administrative nature. In fact, in addition to being rather superficial, such an evaluation does not take into account all of the aforementioned technical advantages achieved thanks to the present invention, such as, for example, the high robustness against fraud attacks attempted by malicious third parties.

In other words, the characteristics of the present invention relating to the information flows between TSP 1, users 2 and SPs 3, as well as the specific respectively exchanged information (and, in the case of two-dimensional codes, also the related manner in which this information is transmitted) must necessarily be considerate as characteristics having a technical nature, because they are implemented through technical means and because they enable achieving advantages of a technical nature.

What has just been explained naturally holds, and in an even more apparent manner, for the two certification procedures selectable by a user 2 according to the present invention (i.e. a step of enabling the TT service by default (one-off operation) + step of executing a certified transaction (to be repeated for each transaction), or a step of starting a certified transaction + step of completing the certified transaction (both to be repeated for each transaction)).

In conclusion, it is clear that various modifications or developments can be applied to the present invention without departing from the scope of the invention as defined in the appended claims.

In particular, some possible modifications or developments to the present invention could comprise the following:
- the document and the terms relating to the transaction could conveniently be displayed on the first electronic communications device 21 of the user 2;
- registration to the TT service could be conveniently performed via a "social login" with the consequent possibility of handling and monitoring user data in an anonymous manner for the purposes of market research;
- the possibility of SPs 3 sending push notifications containing promotional messages to users 2 could be conveniently provided;
- the electronic signature system 10 could conveniently make a function available to users 2 for searching for and managing the SPs 3 that have joined the TT service.

## Claims

1. A certification method for certifying transactions between a user (2) and a remote provider (3) by means of an electronic signature system (10), wherein the user (2) uses a browser (221) installed on a first electronic communications device (22) to start a given transaction with a management server (31) of the remote provider (3), and wherein the electronic signature system (10) includes:
• a certification server (11) connected to a database (12) on which first data related to the given transaction are stored, including
- a user code (UT_UID) that univocally identifies the user (2),
- a provider code (SP UID) that univocally identifies the remote provider (3) and
- a transaction code (TX_UID2; TX_UID3) that univocally identifies the given transaction; and
• a software application (13) on which the user code (UT UID) is stored and which is installed on a second electronic communications device (21) used by the user (2), said second electronic communications device (21) being equipped with a digital camera;
the certification method comprising a certification step that includes:
• requesting, by the management server (31), certification of the given transaction from the certification server (11), and sending the provider code (SP_UID) and at least one document related to the given transaction from said management server (31) to said certification server (11);
• generating, by the certification server (11), a first two-dimensional code (QR2; QR4) in which the transaction code (TX_UID2; TX_UID3) is encoded;
• sending the first two-dimensional code (QR2; QR4) from the certification server (11) to the management server (31);
• sending the first two-dimensional code (QR2; QR4) from the management server (31) to the browser (221);
• displaying, by the browser (221), the first two-dimensional code (QR2; QR4) on a screen of the first electronic communications device (22);
• capturing, by the digital camera of the second electronic communications device (21), the first two-dimensional code (QR2; QR4) displayed on the screen of the first electronic communications device (22);
• extracting, by the software application (13), the transaction code (TX_UID2; TX_UID3) encoded in the first two-dimensional code (QR2; QR4) captured;
• sending, from the software application (13) to the certification server (11), second data related to the given transaction that include the user code (UT UID) stored on the software application (13) and the extracted transaction code (TX_UID2; TX_UID3);
• checking, by the certification server (11), whether the second data related to the given transaction received from the software application (13) are consistent with the first data related to the given transaction stored on the database (12); and,
• if the first and the second data related to the given transaction are consistent with each other,
- electronically signing, by the certification server (11), the document related to the given transaction received from the management server (31), and
- storing, on the database (12), the electronically signed document related to the given transaction.

2. The certification method of claim 1, wherein the user (2) uses the browser (221) to start the given transaction by selecting a first certification procedure or a second certification procedure;
wherein the first certification procedure includes performing:
• a user-provider coupled registration step and the certification step; or
• only the certification step if the user-provider coupled registration step has already been performed for a previous transaction between the user (2) and the remote provider (3);
wherein the second certification procedure includes performing a certification start step and the certification step;
the user-provider coupled registration step comprising:
• requesting, by the management server (31), a user-provider coupled registration from the certification server (11), by
- sending, from said management server (31) to said certification server (11), the provider code (SP_UID) and
- communicating, from said management server (31) to said certification server (11), a first web resource (URL_OK1, URL_KO1) that is exposed by said management server (31) and is intended to be invoked to inform said management server (31) of a result of the user-provider coupled registration;
• generating, by the certification server (11),
- a user-provider coupled registration code (TX_UID1) that univocally identifies the user-provider coupled registration and
- a second two-dimensional code (QR1) in which the user-provider coupled registration code (TX_UID1) is encoded;
• storing on the database (12), by the certification server (11), first data related to the user-provider coupled registration that include the provider code (SP_UID) received from the management server (31) and the generated user-provider coupled registration code (TX_UID1);
• sending the user-provider coupled registration code (TX_UID1) and the second two-dimensional code (QR1) from the certification server (11) to the management server (31);
• sending the second two-dimensional code (QR1) from the management server (31) to the browser (221);
• displaying, by the browser (221), the second two-dimensional code (QR1) on the screen of the first electronic communications device (22);
• capturing, by the digital camera of the second electronic communications device (21), the second two-dimensional code (QR1) displayed on the screen of the first electronic communications device (22);
• extracting, by the software application (13), the user-provider coupled registration code (TX_UID1) encoded in the second two-dimensional code (QR1) captured;
• sending, from the software application (13) to the certification server (11), second data related to the user-provider coupled registration that include the user code (UT_UID) stored on the software application (13) and the extracted user-provider coupled registration code (TX_UID1);
• checking, by the certification server (11), whether the second data related to the user-provider coupled registration received from the software application (13) are consistent with the first data related to the user-provider coupled registration stored on the database (12);
• if the first and the second data related to the user-provider coupled registration are consistent with each other,
- generating, by the certification server (11), a user alias (UT_ALIAS) associated with the user (2) and
- including, by the certification server (11), in the first data related to the user-provider coupled registration stored on the database (12), also said generated user alias (UT_ALIAS) and the user code (UT_UID) included in the second data related to the user-provider coupled registration received from the software application (13);
• sending, from the certification server (11) to the software application (13), a confirmation of the user-provider coupled registration or a first error message depending on whether the second data related to the user-provider coupled registration are consistent with the first data related to the user-provider coupled registration;
• invoking, by the certification server (11) or the software application (13), the first web resource (URL_OK1, URL_KO1) to inform the management server (31) of a positive or negative result of the user-provider coupled registration depending on whether the second data related to the user-provider coupled registration are consistent with the first data related to the user-provider coupled registration;
• if the management server (31) is informed of a positive result of the user-provider coupled registration, requesting, by said management server (31), the user alias (UT_ALIAS) from the certification server (11), and sending the provider code (SP_UID) and the user-provider coupled registration code (TX_UID1) from said management server (31) to said certification server (11); and,
• in response to the request for the user alias (UT_ALIAS) from the management server (31), sending said user alias (UT_ALIAS) from the certification server (11) to said management server (31) ;
wherein, in the first certification procedure, the certification step is performed only in case of positive result of the user-provider coupled registration;
wherein, in the first certification procedure, requesting, by the management server (31), certification of the given transaction from the certification server (11) includes sending also the user alias (UT_ALIAS) from said management server (31) to said certification server (11);
wherein, in the first certification procedure, the certification step includes:
• in response to the request for certification of the given transaction by the management server (31), generating, by the certification server (11), the transaction code (TX_UID2) and storing on the database (12), by the certification server (11), the provider code (SP UID) received from the management server (31), the generated transaction code (TX_UID2) and the user code (UT_UID) of the user (2) associated with the user alias (UT_ALIAS) received from the management server (31), thereby obtaining the first data related to the given transaction;
the certification start step comprising:
• requesting, by the management server (31), a start of certification of the given transaction from the certification server (11) by
- sending the provider code (SP_UID) from said management server (31) to said certification server (11) and
- communicating, from said management server (31) to said certification server (11), a second web resource (URL_OK3, URL_KO3) that is exposed by said management server (31) and is intended to be invoked to inform said management server (31) of a result of the start of certification of the given transaction;
• generating, by the certification server (11), the transaction code (TX_UID3) and a third two-dimensional code (QR3) in which said transaction code (TX_UID3) is encoded;
• storing on the database (12), by the certification server (11), the provider code (SP UID) received from the management server (31) and the generated transaction code (TX_UID3), thereby obtaining the first data related to the given transaction;
• sending the third two-dimensional code (QR3) from the certification server (11) to the management server (31);
• sending the third two-dimensional code (QR3) from the management server (31) to the browser (221);
• displaying, by the browser (221), the third two-dimensional code (QR3) on the screen of the first electronic communications device (22);
• capturing, by the digital camera of the second electronic communications device (21), the third two-dimensional code (QR3) displayed on the screen of the first electronic communications device (22);
• extracting, by the software application (13), the transaction code (TX_UID3) encoded in the captured third two-dimensional code (QR3);
• sending, from the software application (13) to the certification server (11), data related to the start of certification of the given transaction that include
- the user code (UT_UID) stored on the software application (13) and
- the extracted transaction code (TX_UID3);
• checking, by the certification server (11), whether the data related to the start of certification of the given transaction received from the software application (13) are consistent with the first data related to the given transaction stored on the database (12);
• if the data related to the start of certification of the given transaction are consistent with the first data related to the given transaction, adding, by the certification server (11), to said first data related to the given transaction stored on the database (12), also the user code (UT UID) included in the data related to the start of certification of the given transaction received from the software application (13);
• sending, from the certification server (11) to the software application (13), a confirmation of the start of certification of the given transaction or a second error message depending on whether the data related to the start of certification of the given transaction are consistent with the first data related to the given transaction;
• invoking, by the certification server (11) or the software application (13), the second web resource (URL_OK3, URL_KO3) to inform the management server (31) of a positive or negative result of the start of certification of the given transaction depending on whether the data related to the start of certification of the given transaction are consistent with the first data related to the given transaction;
and wherein, in the second certification procedure, the certification step is performed only in case of positive result of the start of certification of the given transaction.

3. The certification method according to claim 1 or 2, wherein requesting, by the management server (31), certification of the given transaction from the certification server (11) includes communicating, from said management server (31) to said certification server (11), a third web resource (URL_OK2, URL_KO2, URL_OK4, URL_KO4) that is exposed by said management server (31) and is intended to be invoked to inform said management server (31) of a result of the certification of the given transaction;
wherein the certification step also includes invoking, by the certification server (11) or the software application (13), the third web resource (URL_OK2, URL_KO2, URL_OK4, URL_KO4) to inform the management server (31) of a positive or negative result of the certification of the given transaction depending on whether the second data related to the given transaction are consistent with the first data related to the given transaction.

4. The certification method of claim 3, wherein the certification step also includes:
• if the management server (31) is informed of a positive result of the certification of the given transaction, requesting, by said management server (31), the electronically signed document related to the given transaction from the certification server (11); and,
• in response to the request from the management server (31) for the electronically signed document related to the given transaction, sending said electronically signed document related to the given transaction from the certification server (11) to said management server (31).

5. The certification method according to claim 3 or 4, wherein the certification step also includes:
• in response to the request for certification of the given transaction by the management server (31), sending a push notification containing third data related to the given transaction from the certification server (11) to the software application (13);
• displaying the third data related to the given transaction contained in the push notification on a screen of the second electronic communications device (21) and requesting a confirmation of the given transaction from the user (2);
• capturing, by the digital camera of the second electronic communications device (21), the first two-dimensional code (QR2; QR4) displayed on the screen of the first electronic communications device (22) only if the user (2) confirms the given transaction; and
• sending, from the certification server (11) to the software application (13), a confirmation of certification of the given transaction or a third error message depending on whether the second data related to the given transaction are consistent with the first data related to the given transaction.

6. The certification method of claim 5, wherein the third web resource (URL_OK2, URL_KO2, URL_OK4, URL_KO4) is indicated in the push notification sent from the certification server (11) to the software application (13);
and wherein the certification step includes invoking, by the software application (13), the third web resource (URL_OK2, URL_KO2, URL_OK4, URL_KO4) to inform the management server (31) of a positive or negative result of the certification of the given transaction depending on whether said software application (13) receives the confirmation of certification of the given transaction or the third error message from the certification server (11).

7. The certification method according to claim 5 or 6, wherein requesting, by the management server (31), certification of the given transaction from the certification server (11) includes sending from said management server (31) to said certification server (11) also an identifier of the given transaction (EXT_ID1; EXT_ID2) assigned by the management server (31) to said given transaction;
and wherein the third data related to the given transaction contained in the push notification include said identifier of the given transaction (EXT_ID1; EXT_ID2).

8. The certification method according to any claim 5-7, wherein requesting, by the management server (31), certification of the given transaction from the certification server (11) includes sending also metadata related to the given transaction from said management server (31) to said certification server (11); wherein the third data related to the given transaction contained in the push notification include one or more of said metadata related to the given transaction;
and wherein the certification step also includes:
• if the second data related to the given transaction are consistent with the first data related to the given transaction, electronically signing also the metadata related to the given transaction by the certification server (11) and storing the electronically signed metadata related to the given transaction on the database (12);
• if the management server (31) is informed of a positive result of the certification of the given transaction, requesting, by said management server (31), the electronically signed document related to the given transaction and the electronically signed metadata related to the given transaction from the certification server (11); and,
• in response to the request from the management server (31) for the electronically signed document related to the given transaction and the electronically signed metadata related to the given transaction, sending said electronically signed document related to the given transaction and said electronically signed metadata related to the given transaction from the certification server (11) to said management server (31) .

9. The certification method according to any preceding claim, wherein the first data related to the given transaction stored on the database (12) also include the first two-dimensional code (QR2; QR4); and wherein the second data related to the given transaction sent from the software application (13) to the certification server (11) also include the captured first two-dimensional code (QR2; QR4).

10. The certification method according to any preceding claim, wherein requesting, by the management server (31), certification of the given transaction from the certification server (11) includes sending also a digest of the document related to the given transaction from said management server (31) to said certification server (11); wherein said digest is generated based on a predefined hash algorithm; and wherein said digest is stored on the database (12).

11. The certification method of claim 2, wherein the first web resource (URL_OK1, URL_KO1) is indicated in the second two-dimensional code (QR1) generated by the certification server (11);
and wherein the user-provider coupled registration step includes invoking, by the software application (13), the first web resource (URL_OK1, URL_KO1) to inform the management server (31) of a positive or negative result of the user-provider coupled registration depending on whether said software application (13) receives the confirmation of the user-provider coupled registration or the first error message from the certification server (11).

12. The certification method according to claim 2 or 11, wherein the first data related to the user-provider coupled registration stored on the database (12) also include the generated second two-dimensional code (QR1); and wherein the second data related to the user-provider coupled registration sent from the software application (13) to the certification server (11) also include the captured second two-dimensional code (QR1).

13. The certification method of claim 2, wherein the second web resource (URL_OK3, URL_KO3) is indicated in the third two-dimensional code (QR3) generated by the certification server (11);
and wherein the certification start step includes invoking, by the software application (13), the second web resource (URL_OK3, URL_KO3) to inform the management server (31) of a positive or negative result of the start of certification depending on whether said software application (13) receives from the certification server (11) the confirmation of the start of certification of the given transaction or the second error message.

14. The certification method according to claim 2 or 13, wherein the first data related to the given transaction stored on the database (12) also include the generated third two-dimensional code (QR3); and wherein the data related to the start of certification of the given transaction sent from the software application (13) to the certification server (11) also include the captured third two-dimensional code (QR3).

15. The certification method according to any preceding claim, comprising a preliminary step of enrolment of the remote provider (3) and of the user (2) to the electronic signature system (10);
wherein said preliminary step of enrolment of the remote provider (3) and of the user (2) to the electronic signature system (10) includes:
• generating, by the certification server (11), the provider code (SP_UID) and sending the generated provider code (SP_UID) from said certification server (11) to the management server (31);
• installing the software application (13) on the second electronic communications device (21);
• sending, from the software application (13) to the certification server (11), a mobile telephone number of the user (2) and a fingerprint that identifies said second electronic communications device (21);
• sending an SMS message from the certification server (11) to the mobile telephone number of the user (2), wherein said SMS message contains an OTP;
• sending, from the software application (13) to the certification server (11), said fingerprint and the OTP contained in said SMS message;
• checking, by the certification server (11), whether the OTP sent by the software application (13) is correct;
• if the OTP sent by the software application (13) is correct,
- generating, by the certification server (11), the user code (UT_UID), and
- sending the generated user code (UT_UID) from said certification server (11) to said software application (13);
• storing the user code (UT_UID), received from the certification server (11), in an encrypted form on the software application (13).
